# FASCICULE DE BREVET EUROPEEN

(11) **EP 1 961 286 B1**
(45) Date de publication et mention de la délivrance du brevet: **10.02.2010**
(21) Numéro de dépôt: 08002983.8
(22) Date de dépôt: 18.02.2008
(51) Int. Cl.: A01D 33/14

(54) **Ensemble pour machine à récolter les produits en terre, machine équipée d'un tel ensemble et procédé de commande d'une telle machine**
Anordnung für Erntemaschine von Bodenprodukten, mit einer solchen Anordnung ausgestattete Maschine und Bedienungsverfahren einer solchen Maschine
Assembly for a machine for digging up products from the soil, machine equipped with such an assembly and method of controlling such a machine

(30) Priorité: 21.02.2007 FR 0701217
(43) Date de publication de la demande: 27.08.2008
(73) Titulaire: EXEL INDUSTRIES, 51206 Epernay Cedex (FR)
(72) Inventeur: Ballu, Patrick Jean Marie, 51100 Reims (FR)
(74) Mandataire: Gaillarde, Frédéric F. Ch.

(56) Documents cités:
- EP-A1- 0 363 916
- EP-A1- 0 803 178
- FR-A- 2 501 958

## Description

La présente invention se rapporte aux machines à arracher les tubercules tels que les betteraves, et plus généralement aux machines à extraire des produits du sol.

Comme cela connu notamment du document FR 2 501 958, une machine à arracher les betteraves comprend notamment un ensemble d'extraction, comportant des moyens permettant d'extraire les betteraves du sol, ainsi qu'un ensemble de convoyage, situé derrière l'ensemble d'extraction par rapport au sens d'avancement de la machine, et permettant de convoyer les betteraves vers une zone de stockage située soit dans la machine, soit à l'extérieur de celle-ci (dans une remorque traînée par un tracteur, par exemple).

Classiquement, une telle machine peut être équipée d'un système permettant de maintenir sensiblement constante la profondeur des moyens d'extraction dans le sol, quelles que soient les irrégularités du sol.

Un tel système permet de garantir que les moyens d'extraction conservent leur profondeur de travail dans le sol à l'apparition d'irrégularités importantes, et d'éviter ainsi soit qu'ils n'arrachent mal les betteraves, soit qu'ils ne rentrent trop dans le sol et ne récupèrent ainsi une quantité indésirable de terre, et/ou ne subissent des efforts importants susceptibles d'engendrer des déformations mécaniques dans certaines pièces de la machine.

Dans un tel système de la technique antérieure, où les moyens de convoyage et les moyens d'extraction sont liés mécaniquement, une modification de la profondeur de travail des moyens d'extraction entraîne une modification simultanée de la hauteur des moyens de convoyage.

Ainsi, une réduction de la profondeur de travail des moyens d'extraction entraîne simultanément et nécessairement un rehaussement des moyens de convoyage, ces derniers risquant alors de laisser s'échapper les betteraves par-dessous.

Inversement, une augmentation de la profondeur de travail des moyens d'extraction entraîne simultanément et nécessairement un abaissement des moyens de convoyage, ce qui provoque un ramassage excessif de terre.

Pour éviter ces inconvénients, il faut un arrêt complet de la machine et une intervention lourde comprenant des opérations de démontage/remontage visant à modifier les hauteurs relatives des moyens d'extraction et des moyens de convoyage.

La présente invention a notamment pour but de fournir des moyens permettant de surmonter les inconvénients susmentionnés.

On atteint ce but de l'invention grâce à un ensemble pour machine à récolter les produits en terre, comprenant :
- des moyens d'extraction de ces produits,
- des moyens de convoyage de ces produits, mobiles par rapport auxdits moyens d'extraction, et
- des moyens de maintien en temps réel de la profondeur de travail des moyens d'extraction à une première valeur de consigne (E),
cet ensemble étant caractérisé en ce qu'il comprend des moyens de maintien en temps réel de la hauteur desdits moyens de convoyage à une deuxième valeur de consigne (C) prédéterminée, indépendante de ladite première valeur de consigne (E).

Grâce à ces caractéristiques, les moyens d'extraction sont en quelques sorte indépendants des moyens de convoyage : le choix d'une valeur de consigne E de profondeur de travail des moyens d'extraction est sans incidence sur la hauteur des moyens de de convoyage telle qu'elle est imposée par la consigne C, et inversement.

On peut de la sorte modifier en temps réel et sans avoir à arrêter la machine, la profondeur de travail E des moyens d'extraction d'une part et/ou la hauteur C des moyens de convoyage d'autre part, et ceci indépendamment l'une de l'autre.

Suivant d'autres caractéristiques optionnelles de l'ensemble selon l'invention :
- lesdits moyens de maintien en temps réel de la profondeur de travail desdits moyens d'extraction sont automatiques ;
- lesdits moyens de maintien en temps réel de la hauteur desdits moyens de convoyage sont automatiques ;
- ledit ensemble comprend une première stucture supportant lesdits moyens d'extraction, une deuxième structure supportant lesdits moyens de convoyage, au moins un premier actionneur susceptible de faire varier la hauteur de ladite première structure, au moins un deuxième actionneur suscep-tible de modifier la position de ladite deuxième stucture par rapport à ladite première structure, au moins un premier capteur apte à engendrer un signal représentatif de la configuration du sol, au moins un deuxième capteur apte à engendrer un signal représentatif de la position de ladite deuxième structure par rapport à ladite première structure, au moins un organe de fixation de consigne, et au moins un calculateur dûment programmé, apte à traiter les informations provenant desdits premier et deuxième capteurs et desdits moyens de consigne, et à commander en conséquence lesdits premier et deuxième actionneurs,
- ladite deuxième structure est montée pivotante par rapport à ladite première structure, ledit deuxième capteur étant alors apte à engendrer un signal représentatif de l'angle de rotation de ladite deuxième structure par rapport à ladite première stucture : ce mode de réalisation offre une solution particulièrement simple d'articulation des deux structures l'une par rapport à l'autre ;
- ladite deuxième structure est montée mobile en translation par rapport à ladite première structure, ledit deuxième capteur étant alors apte à engendrer un signal représentatif du déplacement linéaire de ladite deuxième structure par rapport à ladite première structure ;
- lesdits actionneurs sont choisis dans le groupe comprenant les actionneurs hydrauliques, pneumatiques, électriques, électromagnétiques, à crémaillère : de nombreux modèles de tels actionneurs existent dans le commerce ;
- lesdits moyens d'extraction comprennent des organes d'extraction choisis dans le groupe comprenant les disques à socs, les socs oscillants, les socs fixes, les roues, et lesdits moyens de convoyage sont choisis dans le groupe comprenant les rouleaux, les turbines, les tapis : de tels moyens d'extraction et de convoyage sont tout à fait classiques dans le domaine de l'arrachage des betterraves.
- cet ensemble comprend des moyens pour agir de manière différenciée à droite et à gauche sur les réglages de profondeur dedits moyens d'extraction et de hauteur desdits moyens de convoyage.

La présente invention se rapporte également à une machine de récolte des produits en terre, comprenant un châssis monté sur une pluralité de roues, remarquable en ce qu'elle comprend un ensemble conforme à ce qui précède, relié audit châssis.

Suivant une caractéristique optionnelle de cette machine, ledit ensemble est relié audit châssis en deux points avant et un point arrière, lesdits deux points avant étant formés par deux actionneurs, et ledit point arrière étant formé par une articulation mécanique passive : cette suspension en trois points est classique sur les machines à arracher les betteraves, et permet donc de fixer l'ensemble selon l'invention sans aucune adaptation particulière sur les machines existantes.

La présente invention se rapporte également à un procédé de commande d'un ensemble conforme à ce qui précède, remarquable en ce qu'on règle en temps réel les positions relatives desdits moyens d'extraction et desdits moyens de convoyage de manière que la hauteur desdits moyens de convoyage demeure sensiblement constante par rapport au sol, à leur propre valeur de consigne (C), et la profondeur de travail desdits moyens d'extraction demeure à leur propre valeur de consigne (E).

Suivant d'autres caractéristiques optionnelles de ce procédé :
- on règle la hauteur desdits moyens de convoyage et la profondeur desdits moyens d'extraction de manière automatique :
- on maintient manuellement la hauteur desdits moyens de convoyage à leur propre valeur de consigne (C), et on maintient de manière automatique la profondeur de travail desdits moyens d'extraction à leur propre valeur de consigne (E) ;
- on maintient de manière automatique la hauteur desdits moyens de convoyage à leur propre valeur de consigne (C), et on maintient manuellement la profondeur de travail desdits moyens d'extraction à leur propre valeur de consigne (E) ;
- on maintient de manière automatique la hauteur desdits moyens de convoyage et la profondeur desdits moyens d'extraction à leur propres valeurs de consigne respectives (C, E) : ceci permet de soulager l'opérateur de toute intervention ;
- lorsque ledit ensemble passe sur une bosse, on commence par rehausser lesdits moyens d'extraction puis par abaisser lesdits moyens de convoyage par rapport auxdits moyens d'extraction selon une temporisation appropriée dépendant de la vitesse de déplacement dudit ensemble, de sa géométrie et de son inertie, puis, également selon une temporisation appropriée, on abaisse lesdits moyens d'extraction puis on rehausse lesdits moyens de convoyage par rapport auxdits moyens d'extraction, puis enfin on abaisse lesdits moyens de convoyage pour revenir à leur configuration initiale, une fois la bosse passée derrière ces derniers ;
- lorsque ledit ensemble passe sur un creux, on commence par abaisser lesdits moyens d'extraction puis par rehausser lesdits moyens de convoyage par rapport auxdits moyens d'extraction selon une temporisation appropriée dépendant de la vitesse de déplacement dudit ensemble, de sa géométrie et de son inertie, puis, également selon une temporisation appropriée, on rehausse lesdits moyens d'extraction puis on abaisse lesdits moyens de convoyage par rapport auxdits moyens d'extraction, puis enfin on rehausse lesdits moyens de convoyage pour revenir à leur configuration initiale, une fois le creux passé derrière ces derniers ;
   - on agit de manière différenciée à droite et à gauche sur les réglages de profondeur dedits moyens d'extraction et de hauteur desdits moyens de convoyage, afin de maintenir ces moyens d'extraction et de convoyage parallèles au sol.

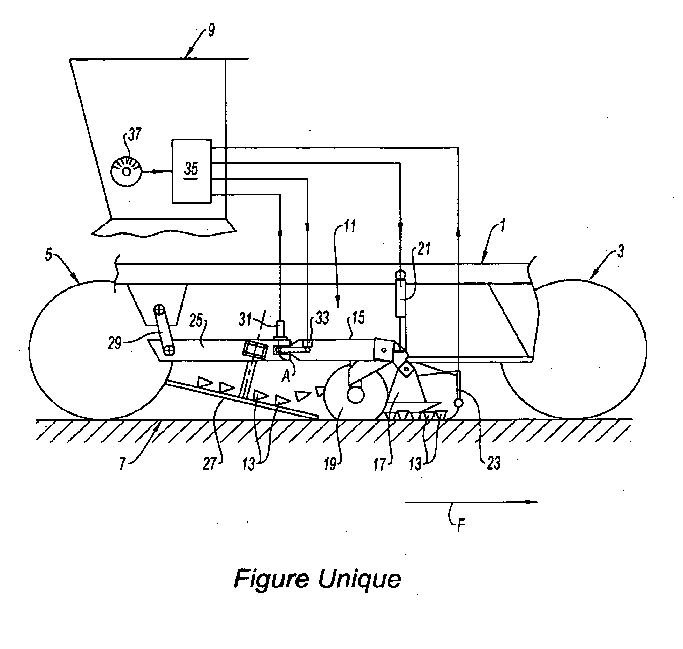

D'autres caractéristiques et avantages de la présente invention apparaîtront à la lumière de la description qui va suivre, et à l'examen de l'unique figure annexée, représentant de manière schématique une machine selon l'invention.

On se reporte à cette figure, sur laquelle on a représenté une machine à arracher les betteraves comprenant une poutre maîtresse 1 montée sur des essieux avant 3 et arrière 5 assurant le roulage de la machine sur le sol 7.

Cette machine comprend également une cabine 9, susceptible d'accueillir un conducteur non représenté.

Le sens normal d'avancement de cette machine à arracher les betteraves est indiqué par la flèche F représentée sur la figure, et les termes « à droite » et « à gauche » doivent s'entendre transversalement par rapport à ce sens d'avancement.

Cette machine à arracher les betteraves comprend un ensemble 11 suspendu à la poutre maîtresse 1, permettant d'une part d'extraire les betteraves 13 du sol 7, et d'autre part de convoyer ces betteraves vers une zone de stockage (non représentée), située soit à l'intérieur de la machine, soit à l'extérieur de celle-ci (par exemple dans un camion suiveur).

Dans sa partie avant par rapport au sens d'avancement de la machine, l'ensemble 11 comporte une première structure de support 15 sur laquelle--sont montés des moyens d'extraction de betteraves 13.

Dans l'exemple représenté, ces moyens d'extraction comprennent des couples de socs fixes 17 et/ou de disques rotatifs 19, connus en soi et permettant une extraction efficace des betteraves 13 du sol 7.

Typiquement, on peut dénombrer une demi-douzaine de tels couples socs/disques, distribués sensiblement selon la direction transversale de la machine.

Bien entendu, la présente invention n'est nullement limitée à ce type de moyens d'extraction et l'on peut envisager de manière tout à fait équivalente des moyens d'extraction à socs oscillants, à socs fixes, ou à roues, parfaitement connus de l'homme du métier.

La première structure de support 15 est reliée à la poutre maîtresse 1 par une pluralité, et typiquement deux vérins 21 (un seul étant visible sur la figure), situés à droite et à gauche de l'axe d'avancement de la machine, et qui peuvent être hydrauliques, pneumatiques, électriques, électromagnétiques ou à crémaillère.

A l'avant de la première structure de support 15 sont fixés des capteurs 23 connus en soi, permettant de détecter la hauteur de la première structure de support 15 par rapport au sol 7.

Typiquement, on place un capteur 23 à chaque extrémité (selon la direction transversale à l'avancement) de la structure de support 15, c'est-à-dire un à droite et un à gauche.

De tels capteurs, disponibles dans le commerce, peuvent être par exemple du type palpeur mécanique ou capteur à ultrasons.

A l'arrière de la première structure de support 15 se trouve une deuxième structure de support 25, sur laquelle sont montés des moyens de convoyage 27 des betteraves 13.

Ces moyens de convoyage peuvent comprendre typiquement des grilles rotatives (comme cela est représenté), appelées aussi « turbines », des rouleaux ou bien des tapis, bien connus de l'homme du métier.

Ces moyens de convoyage communiquent avec des moyens de stockage (non représentés) des betteraves, tels que des trémies, pouvant être situés soit à l'intérieur de la machine, soit à l'extérieur de celle-ci, par exemple dans une remorque attelée à un tracteur qui suit la machine.

La deuxième structure de support 25 est suspendue à la poutre maîtresse 1 de manière passive par au moins une biellette 29, ou par une articulation simple ou à rotule, bien connue de l'homme du métier.

La deuxième structure de support 25 est montée articulée, et plus précisément, dans l'exemple représenté, pivotante par rapport à la première structure de support 15, autour d'un axe A transversal à la direction d'avancement de la machine.

Au moins un actionneur 31, tel qu'un vérin hydraulique, pneumatique, électrique, électromagnétique, ou à crémaillère, est interposé entre les premier 15 et deuxième 25 supports de manière à agir sur l'inclinaison de ces deux support l'un par rapport à l'autre.

Au moins un capteur 33 est prévu de manière à détecter l'angle d'inclinaison du deuxième support 25 par rapport au premier support 15.

On va à présent s'intéresser plus particulièrement au système de commande électronique qui interagit avec les organes mécaniques qui viennent d'être décrits.

Ce système de commande électronique comprend un calculateur 35 relié par des circuits électriques notamment au vérin 21, au capteur de hauteur 23, au vérin 31, au capteur d'angle 33, ainsi qu'à un bouton 37 de fixation de consigne E de profondeur de travail, situé à l'intérieur de la cabine 9.

Plus précisément, le calculateur 35 est capable d'agir sur les vérins 21 et 31 en fonction d'une part des signaux envoyés par les capteurs 23, 33 et d'autre part de la consigne 37.

Encore plus précisément, le calculateur 35 est dûment programmé de manière à permettre les actions suivantes.

L'opérateur situé à l'intérieur de la cabine 9 fixe une consigne E de profondeur de travail au moyen du bouton 37.

Sous l'effet de cette consigne, le calculateur 35 règle la hauteur des vérins 21 de manière que les socs 17 et les disques 19 pénètrent à l'intérieur du sol 7 selon la profondeur souhaitée.

Le calculateur 35 règle alors le vérin 31 de manière que la hauteur des moyens de convoyage 27 par rapport au sol ne soit pas modifiée, c'est-à-dire demeure à une hauteur de consigne C.

Cette opération de réglage est permise par le capteur 33 qui renseigne le calculateur 35 sur les positions relatives des première 15 et deuxième 25 structures de support : le calculateur 35 comprend en effet, dans sa mémoire, une table de valeurs qui lui permet de déduire, à partir des informations issues du capteur de hauteur 23, à quelle position du capteur 33 il doit parvenir en allongeant ou en raccourcissant les vérins 31, de manière à maintenir constante la hauteur des moyens de convoyage 27 par rapport au sol, conformément à la consigne C.

Lorsque les capteurs de hauteur 23 détectent des modifications dans le relief du sol 7, le calculateur 35 traite les signaux envoyés par ces capteurs 23 et règle les vérins 21 et 31 de manière d'une part que la hauteur des moyens de convoyage 27 demeure sensiblement constante par rapport au sol 7 (consigne C), et d'autre part que la profondeur de travail des socs 17 et/ou des disques 19 demeure constante (consigne E) à l'intérieur du sol 7.

De la sorte, d'une part les betteraves 13 peuvent être accostées presque toujours à la bonne hauteur par les socs 17 et les disques 19, ce qui permet de les saisir correctement et de les extraire du sol 7 sans dommage, et d'autre part les moyens de convoyage 27 ne risquent pas de pénétrer trop profondément dans le sol et d'emporter trop de terre, ni, à l'inverse, d'être situés trop haut et de laisser ainsi les betteraves s'échapper en dessous.

Plus précisément, lorsque les capteurs 23 détectent une hausse brutale du niveau du sol 7, c'est-à-dire une bosse, le calculateur 35 ordonne successivement, avec éventuellement une temporisation adaptée d'une part à la vitesse de déplacement de la machine et d'autre part aux distances relatives des capteurs 23, des moyens d'extraction 17, 19 et des moyens de convoyage 27 :
- un raccourcissement de la longueur des vérins 21, ce qui a pour effet de rehausser la première structure de support 15, et donc les socs 17 et disques 19, et une action sur le vérin 31 de manière à faire pivoter la deuxième structure de support 25 par rapport à la première structure de support 15 dans le sens qui assure un mouvement vers le bas de cette deuxième structure de support 25, de manière à éviter le rehaussement des moyens de convoyage par rapport au sol (maintien de la consigne C), puis
- un allongement de la longueur des vérins 21, ce qui a pour effet d'abaisser la première structure de support 15, et donc les socs 17 et disques 19, pour qu'ils reviennent à leur position initiale et restent à la profondeur de consigne E, et une action sur le vérin 31 de manière à faire pivoter la deuxième structure de support 25 par rapport à la première structure de support 15 dans le sens qui assure un mouvement vers le haut de cette deuxième structure de support 25, de manière à maintenir la hauteur de consigne C des moyens de convoyage, et à éviter leur abaissement par rapport au sol, puis enfin
- un allongement de la longueur des vérins 31, de manière à faire pivoter la deuxième structure de support 25 par rapport à la première structure de support 15 dans le sens qui assure un mouvement vers le bas de cette deuxième structure de support 25, ce qui a pour effet d'abaisser lesdits moyens de convoyage, pour qu'ils reviennent à leur position initiale et restent à la hauteur de consigne C par rapport au sol.

Lorsque les capteurs 23 détectent un creux brutal dans le sol 7, les opérations successives décrites ci-dessus se déroulent de manière inverse, c'est-à-dire que les vérins 21 commencent par s'allonger et le vérin 31 à se régler de manière à rehausser les moyens de convoyage 27, puis les vérins 21 se raccourcissent et les vérins 31 se rallongent de manière à rabaisser les moyens de convoyage 27, et enfin les vérins 31 se raccourcissent de manière à rehausser lesdits moyens de convoyage, pour les ramener à leur position initiale et maintenir leur hauteur à la consigne C.

On notera que l'on peut affiner le fonctionnement qui précède, lorsque deux vérins 21 et deux capteurs 23 sont prévus, respectivement à droite et à gauche de la machine : si les modifications du relief du sol sont différentes à droite et à gauche de la machine, on peut agir de manière différenciée sur les vérins 21, voire également sur les vérins 31 s'il y en a également un à droite et un à gauche de la machine.

De la sorte, le maintien de la hauteur des moyens de convoyage par rapport au sol et de la profondeur de travail des moyens d'extraction peut être obtenu de manière homogène sur toute la largeur de la machine.

Comme on l'aura compris à la lumière de la description qui précède, l'invention fournit des moyens permettant de maintenir en temps réel, c'est-à-dire au fur et à mesure de l'avancement de la machine sur le sol 7, et simultanément, d'une part la hauteur des moyens de convoyage par rapport au sol (consigne C), et d'autre part la profondeur de travail des moyens d'extraction (consigne E).

Ce réglage en temps réel peut avoir lieu soit à la suite d'une détection par les capteurs 23 d'un accident du relief du sol 7, soit à la suite d'une modification par le conducteur de la consigne E de profondeur de travail des moyens d'extraction fixée au moyen du bouton 37.

L'opérateur peut intervenir à chaque instant afin de modifier la consigne E de profondeur des moyens d'extraction, sans que cela modifie la consigne C de hauteur des moyens de convoyage, ou inversement, grâce au calculateur 35 qui agira automatiquement sur les vérins 21 et 31, afin de respecter les nouvelles consignes indépendantes E et C.

Bien entendu, la présente invention n'est nullement limitée au mode de réalisation qui vient d'être décrit, fourni à titre de simple exemple.

C'est ainsi par exemple que l'on pourrait envisager une variante, certes moins précise, dans laquelle il n'y aurait pas de décalage de temps (sauf celui du aux inerties mécaniques, hydrauliques...) entre la détection de hauteur par les capteurs 23 et les commandes des vérins 21 et/ou des vérins 31.

Dans ce cas, lors de la détection d'une bosse ou d'un creux par les capteurs de hauteur 23, on actionnerait immédiatement les vérins 21, dans le sens permettant de maintenir la consigne E, mais il serait superflu d'activer les vérins 31 dans un sens puis dans l'autre comme indiqué plus haut, car les décalages en hauteur des moyens de convoyage ainsi engendrés seraient trop brefs et non significatifs compte tenu de la faible distance entre les capteurs 23 et les moyens de convoyage 27.

Néanmoins, dans le cas d'une telle simplification, le calculateur 35 continuerait évidemment de maintenir constante la hauteur des moyens de convoyage (consigne C), indépendamment de tout changement en temps réel de la profondeur de travail des moyens d'extraction (consigne E fixée par le bouton 37), et inversement de maintenir constante la profondeur de travail des moyens d'extraction, indépendamment de tout changement en temps réel de la hauteur des moyens de convoyage, de sorte que les consignes E et C resteraient automatiquement, et en permanence, respectées par le calculateur 35, comme expliqué précédemment.

C'est ainsi également que l'on pourrait envisager que la deuxième structure de support 25 soit montée mobile en translation par rapport à la première structure de support 15, auquel cas le capteur interposé entre ces deux structures serait alors apte à engendrer un signal représentatif du déplacement linéaire de ladite deuxième structure par rapport à ladite première structure. On pourrait également envisager que ces deux structures de support ne soient pas liées mécaniquement de manière directe entre elles.

## Revendications

1. Ensemble pour machine à récolter les produits en terre, comprenant :
- des moyens d'extraction de ces produits (17, 19),
- des moyens de convoyage de ces produits (27), mobiles par rapport auxdits moyens d'extraction (17, 19), et
- des moyens (23, 21) de maintien en temps réel de la profondeur de travail des moyens d'extraction (17, 19) à une première valeur de consigne (E),
cet ensemble étant **caractérisé en ce qu'**il comprend des moyens de maintien en temps réel de la hauteur desdits moyens de convoyage (27) à une deuxième valeur de consigne (C) prédéterminée, indépendante de ladite première valeur de consigne (E).

2. Ensemble selon la revendication 1, **caractérisé en ce que** lesdits moyens de maintien en temps réel de la profondeur de travail (E) desdits moyens d'extraction (17, 19) sont automatiques.

3. Ensemble selon l'une des revendications 1 ou 2, **caractérisé en ce que** lesdits moyens de maintien en temps réel de la hauteur (C) desdits moyens de convoyage (27) sont automatiques.

4. Ensemble selon les revendications 2 et 3, **caractérisé en ce qu'**il comprend une première stucture (15) supportant lesdits moyens d'extraction (17, 19), une deuxième structure (25) supportant lesdits moyens de convoyage (27), au moins un premier actionneur (21) susceptible de faire varier la hauteur de ladite première structure (25), au moins un deuxième actionneur (31) susceptible de modifier la position de ladite deuxième stucture (25) par rapport à ladite première structure (15); au moins un premier capteur (23) apte à engendrer un signal représentatif de la configuration du sol (7), au moins un deuxième capteur (33) apte à engendrer un signal représentatif de la position de ladite deuxième structure (25) par rapport à ladite première structure (15), au moins un organe de fixation de consigne (37), et au moins un calculateur (35) dûment programmé, apte à traiter les informations provenant desdits premier (23) et deuxième (33) capteurs et desdits moyens de consigne (37), et à commander en conséquence lesdits premier (21) et deuxième (31) actionneurs.

5. Ensemble selon la revendication 4, **caractérisé en ce que** ladite deuxième structure (25) est montée pivotante par rapport à ladite première structure (15), ledit deuxième capteur (33) étant alors apte à engendrer un signal représentatif de l'angle de rotation de ladite deuxième structure (25) par rapport à ladite première stucture (15).

6. Ensemble selon la revendication 4, **caractérisé en ce que** ladite deuxième structure est montée mobile en translation par rapport à ladite première structure, ledit deuxième capteur étant alors apte à engendrer un signal représentatif du déplacement linéaire de ladite deuxième structure par rapport à ladite première structure.

7. Ensemble selon l'une quelconque des revendications 4 à 6, **caractérisé en ce que** lesdits actionneurs (21, 31) sont choisis dans le groupe comprenant les actionneurs hydrauliques, pneumatiques, électriques, électromagnétiques, à crémaillère.

8. Ensemble selon l'une quelconque des revendications précédentes, **caractérisé en ce que** lesdits moyens d'extraction comprennent des organes d'extraction choisis dans le groupe comprenant les disques (19) à socs (17), les socs oscillants, les socs fixes, les roues, et lesdits moyens de convoyage sont choisis dans le groupe comprenant les rouleaux, les turbines (27), les tapis.

9. Ensemble selon l'une quelconque des revendications précédentes, **caractérisé en ce qu'**il comprend des moyens pour agir de manière différenciée à droite et à gauche sur les réglages de profondeur dedits moyens d'extraction (17, 19) et de hauteur desdits moyens de convoyage (27).

10. Machine de récolte des produits en terre, comprenant un châssis (1) monté sur une pluralité de roues (3, 5), **caractérisée en ce qu'**elle comprend un ensemble conforme à l'une quelconque des revendications précédentes, relié audit châssis (1).

11. Machine selon la revendication 10, **caractérisée en ce que** ledit ensemble est relié audit châssis (1) en deux points avant (21) et un point arrière (29), lesdits deux points avant étant formés par deux actionneurs, et ledit point arrière étant formé par une articulation mécanique passive.

12. Procédé de commande d'un ensemble conforme à l'une quelconque des revendications 1 à 9, **caractérisé en ce qu'**on règle en temps réel les positions relatives desdits moyens d'extraction (17, 19) et desdits moyens de convoyage (27) de manière que la hauteur desdits moyens de convoyage (27) demeure sensiblement constante par rapport au sol (7), à sa propre valeur de consigne (C), et la profondeur de travail desdits moyens d'extraction (17, 19) demeure à sa propre valeur de consigne (E), indépendante de la valeur de consigne (C) de la hauteur desdits moyens de convoyage (27).

13. Procédé selon la revendication 12 pour la commande d'un ensemble conforme à la revendication 2, dans lequel on maintient manuellement la hauteur desdits moyens de convoyage à sa propre valeur de consigne (C), et on maintient de manière automatique la profondeur de travail desdits moyens d'extraction à sa propre valeur de consigne (E).

14. Procédé selon la revendication 12 pour la commande d'un ensemble conforme à la revendication 3, dans lequel on maintient de manière automatique la hauteur desdits moyens de convoyage à sa propre valeur de consigne (C), et on maintient manuellement la profondeur de travail desdits moyens d'extraction à sa propre valeur de consigne (E).

15. Procédé selon la revendication 12 pour la commande d'un ensemble conforme aux revendications 2 et 3, dans lequel on maintient de manière automatique la hauteur desdits moyens de convoyage (27) et la profondeur desdits moyens d'extraction (17, 19) à leur propres valeurs de consigne respectives (C, E).

16. Procédé selon l'une quelconque des revendications 12 à 15, **caractérisé en ce que** lorsque ledit ensemble passe sur une bosse, on commence par rehausser lesdits moyens d'extraction (17, 19) puis par abaisser lesdits moyens de convoyage (27) par rapport auxdits moyens d'extraction (17, 19) selon une temporisation appropriée dépendant de la vitesse de déplacement dudit ensemble, de sa géométrie et de son inertie, puis, également selon une temporisation appropriée, on abaisse lesdits moyens d'extraction (17, 19) puis on rehausse lesdits moyens de convoyage (27) par rapport auxdits moyens d'extraction (17, 19), puis enfin on abaisse lesdits moyens de convoyage pour revenir à leur configuration initiale, une fois la bosse passée derrière ces derniers.

17. Procédé selon l'une quelconque des revendications 12 à 16, **caractérisé en ce que** lorsque ledit ensemble passe sur un creux, on commence par abaisser lesdits moyens d'extraction (17, 19) puis par rehausser lesdits moyens de convoyage (27) par rapport auxdits moyens d'extraction (17, 19) selon une temporisation appropriée dépendant de la vitesse de déplacement dudit ensemble, de sa géométrie et de son inertie, puis, également selon une temporisation appropriée, on rehausse lesdits moyens d'extraction (17, 19) puis on abaisse lesdits moyens de convoyage (27) par rapport auxdits moyens d'extraction (17, 19), puis enfin on rehausse lesdits moyens de convoyage pour revenir à leur configuration initiale, une fois le creux passé derrière ces derniers.

18. Procédé selon l'une quelconque des revendications 12 à 17, **caractérisé en ce qu'**on agit de manière différenciée à droite et à gauche sur les réglages de profondeur dedits moyens d'extraction (17, 19) et de hauteur desdits moyens de convoyage (27), afin de maintenir ces moyens d'extraction et de convoyage parallèles au sol.

## Claims

1. Assembly for a machine for harvesting products in the ground, comprising:
- means (17, 19) for extracting these products,
- means (27) for conveying these products, and that can be moved relative to the said extraction means (17, 19), and
- means (23, 21) for maintaining in real time the working depth of the extraction means (17, 19) at a first setpoint value (E),
this assembly being **characterized in that** it comprises means for maintaining in real time the height of the said conveying means (27) at a second predetermined setpoint value (C), independent of the said first setpoint value (E).

2. Assembly according to Claim 1, **characterized in that** the said means for maintaining in real time the working depth (E) of the said extraction means (17, 19) are automatic.

3. Assembly according to one of Claims 1 or 2, **characterized in that** the said means for maintaining in real time the height (C) of the said conveying means (27) are automatic.

4. Assembly according to Claims 2 and 3, **characterized in that** it comprises a first structure (15) supporting the said extraction means (17, 19), a second structure (25) supporting the said conveying means (27), at least one first actuator (21) capable of varying the height of the said first structure (25), at least one second actuator (31) capable of modifying the position of the said second structure (25) relative to the said first structure (15), at least one first sensor (23) capable of generating a signal representative of the configuration of the ground (7), at least one second sensor (33) capable of generating a signal representative of the position of the said second structure (25) relative to the said first structure (15), at least one setpoint fixing member (37), and at least one duly programmed computer (35), capable of processing the information originating from the said first sensor (23) and second sensor (33) and from the said setpoint means (37), and, as a result, of controlling the said first actuator (21) and second actuator (31).

5. Assembly according to Claim 4, **characterized in that** the said second structure (25) is mounted so as to pivot relative to the said first structure (15), the said second sensor (33) then being capable of generating a signal representative of the angle of rotation of the said second structure (25) relative to the said first structure (15).

6. Assembly according to Claim 4, **characterized in that** the said second structure is mounted so as to be movable in translation relative to the said first structure, the said second sensor then being capable of generating a signal representative of the linear movement of the said second structure relative to the said first structure.

7. Assembly according to any one of Claims 4 to 6, **characterized in that** the said actuators (21, 31) are chosen from the group comprising the actuators that are hydraulic, pneumatic, electric, electromagnetic, rack-based.

8. Assembly according to any one of the preceding claims, **characterized in that** the said extraction means comprise extraction members chosen from the group comprising discs (19) with shares (17), oscillating shares, fixed shares, wheels, and the said conveying means are chosen from the group comprising rollers, turbines (27), belts.

9. Assembly according to any one of the preceding claims, **characterized in that** it comprises means for acting in a differentiated manner to the right and to the left on the depth adjustments of the said extraction means (17, 19) and the height adjustments of the said conveying means (27).

10. Machine for harvesting products in the ground, comprising a frame (1) mounted on a plurality of wheels (3, 5), **characterized in that** it comprises an assembly according to any one of the preceding claims, connected to the said frame (1).

11. Machine according to Claim 10, **characterized in that** the said assembly is connected to the said frame (1) at two front points (21) and one rear point (29), the said two front points being formed by two actuators and the said rear point being formed by a passive mechanical articulation.

12. Method for controlling an assembly according to any one of Claims 1 to 9, **characterized in that**, in real time, the relative positions of the said extraction means (17, 19) and of the said conveying means (27) are regulated so that the height of the said conveying means (27) remains substantially constant relative to the ground (7), at its own setpoint value (C), and the working depth of the said extraction means (17, 19) remains at its own setpoint value (E), independent of the setpoint value (C) of the height of the said conveying means (27).

13. Method according to Claim 12 for controlling an assembly according to Claim 2, in which the height of the said conveying means is maintained manually at its own setpoint value (C), and the working depth of the said extraction means is maintained automatically at its own setpoint value (E).

14. Method according to Claim 12 for controlling an assembly according to Claim 3, in which the height of the said conveying means is maintained automatically at its own setpoint value (C), and the working depth of the said extraction means is maintained manually at its own setpoint value (E).

15. Method according to Claim 12 for controlling an assembly according to Claims 2 and 3, in which the height of the said conveying means (27) and the depth of the said extraction means (17, 19) are maintained automatically at their own respective setpoint values (C, E).

16. Method according to any one of Claims 12 to 15, **characterized in that**, when the said assembly passes over a bump, the user begins by raising the said extraction means (17, 19) and then by lowering the said conveying means (27) relative to the said extraction means (17, 19) according to an appropriate time delay dependent on the speed of travel of the said assembly, on its geometry and on its inertia, and then, also according to an appropriate time delay, the user lowers the said extraction means (17, 19) and then raises the said conveying means (27) relative to the said extraction means (17, 19) and then finally lowers the said conveying means in order to return to their initial configuration, once the bump has passed behind the latter.

17. Method according to any one of Claims 12 to 16, **characterized in that**, when the said assembly passes over a hollow, the user begins by lowering the said extraction means (17, 19) and then by raising the said conveying means (27) relative to the said extraction means (17, 19) according to an appropriate time delay dependent on the speed of travel of the said assembly, on its geometry and on its inertia, and then, also according to an appropriate time delay, the user raises the said extraction means (17, 19) and then lowers the said conveying means (27) relative to the said extraction means (17, 19) and then finally raises the said conveying means in order to return to their initial configuration, once the hollow has passed behind the latter.

18. Method according to any one of Claims 12 to 17, **characterized in that** the user acts in a differentiated manner to the right and to the left on the depth adjustments of the said extraction means (17, 19) and the height adjustments of the said conveying means (27), in order to maintain these extraction means and conveying means parallel to the ground.

## Patentansprüche

1. Baueinheit für eine Maschine zum Ernten von Feldfrüchten, die enthält:
- Einrichtungen zum Herausziehen dieser Produkte (17, 19),
- Einrichtungen zum Befördern dieser Produkte (27), die bezüglich der Herauszieheinrichtungen (17, 19) beweglich sind, und
- Einrichtungen (23, 21) zur Echtzeit-Beibehaltung der Arbeitstiefe der Herauszieheinrichtungen (17, 19) auf einem ersten Sollwert (E),
wobei diese Baueinheit **dadurch gekennzeichnet ist, dass** sie Einrichtungen zur Echtzeit-Beibehaltung der Höhe der Beförderungseinrichtungen (27) auf einem zweiten vorbestimmten Sollwert (C) unabhängig vom ersten Sollwert (E) enthält.

2. Baueinheit nach Anspruch 1, **dadurch gekennzeichnet, dass** die Einrichtungen zur Echtzeit-Beibehaltung der Arbeitstiefe (E) der Herauszieheinrichtungen (17, 19) automatisch sind.

3. Baueinheit nach einem der Ansprüche 1 oder 2, **dadurch gekennzeichnet, dass** die Einrichtungen zur Echtzeit-Beibehaltung der Höhe (C) der Beförderungseinrichtungen (27) automatisch sind.

4. Baueinheit nach den Ansprüchen 2 und 3, **dadurch gekennzeichnet, dass** sie eine erste Struktur (15), die die Herauszieheinrichtungen (17, 19) trägt, eine zweite Struktur (25), die die Beförderungseinrichtungen (27) trägt, mindestens einen ersten Stellantrieb (21), der die Höhe der ersten Struktur (25) ändern kann, mindestens einen zweiten Stellantrieb (31), der die Stellung der zweiten Struktur (25) bezüglich der ersten Struktur (15) ändern kann, mindestens einen ersten Sensor (23), der ein für die Konfiguration des Bodens (7) repräsentatives Signal erzeugen kann, mindestens einen zweiten Sensor (33), der ein für die Stellung der zweiten Struktur (25) bezüglich der ersten Struktur (15) repräsentatives Signal erzeugen kann, mindestens ein Sollwert-Festlegungsorgan (37) und mindestens einen ordnungsgemäß programmierten Rechner (35) enthält, der die von den ersten (23) und zweiten (33) Sensoren und den Sollwert-Einrichtungen (37) kommenden Informationen verarbeiten und dementsprechend den ersten (21) und den zweiten (31) Stellantrieb steuern kann.

5. Baueinheit nach Anspruch 4, **dadurch gekennzeichnet, dass** die zweite Struktur (25) bezüglich der ersten Struktur (15) schwenkbar montiert ist, wobei der zweite Sensor (33) dann in der Lage ist, ein für den Drehwinkel der zweiten Struktur (25) bezüglich der ersten Struktur (15) repräsentatives Signal zu erzeugen.

6. Baueinheit nach Anspruch 4, **dadurch gekennzeichnet, dass** die zweite Struktur bezüglich der ersten Struktur translationsbeweglich montiert ist, wobei der zweite Sensor dann in der Lage ist, ein für die lineare Verschiebung der zweiten Struktur bezüglich der ersten Struktur repräsentatives Signal zu erzeugen.

7. Baueinheit nach einem der Ansprüche 4 bis 6, **dadurch gekennzeichnet, dass** die Stellantriebe (21, 31) aus der Gruppe ausgewählt werden, die die hydraulischen, pneumatischen, elektrischen, elektromagnetischen Stellantriebe und Stellantriebe mit Zahnstange enthält.

8. Baueinheit nach einem der vorhergehenden Ansprüche, **dadurch gekennzeichnet, dass** die Herauszieheinrichtungen Herausziehorgane enthalten, die aus der Gruppe ausgewählt werden, die die Scheiben (19) mit Scharen (17), die Schwingschare, die festen Schare, die Räder enthält, und die Beförderungseinrichtungen aus der Gruppe ausgewählt werden, die die Rollen, die Turbinen (27), die Laufbänder enthält.

9. Baueinheit nach einem der vorhergehenden Ansprüche, **dadurch gekennzeichnet, dass** sie Einrichtungen enthält, um rechts und links unterschiedlich auf die Tiefeneinstellungen der Herauszieheinrichtungen (17, 19) und die Höheneinstellungen der Beförderungseinrichtungen (27) einzuwirken.

10. Maschine zum Ernten von Feldfrüchten, die ein Fahrgestell (1) enthält, das auf mehrere Räder (3, 5) montiert ist, **dadurch gekennzeichnet, dass** sie eine Baueinheit nach einem der vorhergehenden Ansprüche enthält, die mit dem Fahrgestell (1) verbunden ist.

11. Maschine nach Anspruch 10, **dadurch gekennzeichnet, dass** die Baueinheit mit dem Fahrgestell (1) an zwei vorderen Punkten (21) und einem hinteren Punkt (29) verbunden ist, wobei die zwei vorderen Punkte von zwei Stellantrieben gebildet werden, und der hintere Punkt von einem passiven mechanischen Gelenk gebildet wird.

12. Verfahren zur Steuerung einer Baueinheit nach einem der Ansprüche 1 bis 9, **dadurch gekennzeichnet, dass** die relativen Stellungen der Herauszieheinrichtungen (17, 19) und der Beförderungseinrichtungen (27) in Echtzeit so eingestellt werden, dass die Höhe der Beförderungseinrichtungen (27) bezüglich des Bodens (7) im Wesentlichen konstant auf ihrem eigenen Sollwert (C) bleibt, und dass die Arbeitstiefe der Herauszieheinrichtungen (17, 19) unabhängig vom Sollwert (C) der Höhe der Beförderungseinrichtungen (27) auf ihrem eigenen Sollwert (E) bleibt.

13. Verfahren nach Anspruch 12 zur Steuerung einer Baueinheit nach Anspruch 2, bei dem die Höhe der Beförderungseinrichtungen manuell auf ihrem eigenen Sollwert (C) gehalten wird, und die Arbeitstiefe der Herauszieheinrichtungen automatisch auf ihrem eigenen Sollwert (E) gehalten wird.

14. Verfahren nach Anspruch 12 zur Steuerung einer Baueinheit nach Anspruch 3, bei dem die Höhe der Beförderungseinrichtungen automatisch auf ihrem eigenen Sollwert (C) gehalten wird, und die Arbeitstiefe der Herauszieheinrichtungen manuell auf ihrem eigenen Sollwert (E) gehalten wird.

15. Verfahren nach Anspruch 12 zur Steuerung einer Baueinheit nach den Ansprüchen 2 und 3, bei dem die Höhe der Beförderungseinrichtungen (27) und die Tiefe der Herauszieheinrichtungen (17, 19) automatisch auf ihren eigenen Sollwerten (C, E) gehalten werden.

16. Verfahren nach einem der Ansprüche 12 bis 15, **dadurch gekennzeichnet, dass**, wenn die Baueinheit über eine Erhöhung geht, damit begonnen wird, die Herauszieheinrichtungen (17, 19) anzuheben, dann die Beförderungseinrichtungen (27) bezüglich der Herauszieheinrichtungen (17, 19) gemäß einer geeigneten Verzögerung abzusenken, die von der Verschiebegeschwindigkeit der Baueinheit, ihrer Geometrie und ihrer Trägheit abhängt, dann, ebenfalls gemäß einer geeigneten Verzögerung, die Herauszieheinrichtungen (17, 19) abgesenkt werden, dann die Beförderungseinrichtungen (27) bezüglich der Herauszieheinrichtungen (17, 19) angehoben werden, und schließlich die Beförderungseinrichtungen abgesenkt werden, um in ihre Anfangskonfiguration zurückzukommen, sobald die Erhöhung hinter ihnen liegt.

17. Verfahren nach einem der Ansprüche 12 bis 16, **dadurch gekennzeichnet, dass**, wenn die Baueinheit über eine Vertiefung geht, damit begonnen wird, die Herauszieheinrichtungen (17, 19) abzusenken, dann die Beförderungseinrichtungen (27) bezüglich der Herauszieheinrichtungen (17, 19) gemäß einer geeigneten Verzögerung anzuheben, die von der Verschiebegeschwindigkeit der Baueinheit, ihrer Geometrie und ihrer Trägheit abhängt, dann, ebenfalls gemäß einer geeigneten Verzögerung, die Herauszieheinrichtungen (17, 19) angehoben werden, dann die Beförderungseinrichtungen (27) bezüglich der Herauszieheinrichtungen (17, 19) abgesenkt werden, und schließlich die Beförderungseinrichtungen angehoben werden, um in ihre Anfangskonfiguration zurückzukommen, sobald die Vertiefung hinter ihnen liegt.

18. Verfahren nach einem der Ansprüche 12 bis 17, **dadurch gekennzeichnet, dass** rechts und links unterschiedlich auf die Tiefeneinstellungen der Herauszieheinrichtungen (17, 19) und die Höheneinstellungen der Beförderungseinrichtungen (27) eingewirkt wird, um diese Herauszieh- und Beförderungseinrichtungen parallel zum Boden zu halten.
